# EUROPÄISCHE PATENTSCHRIFT

(11) **EP 1 178 269 B1**
(45) Veröffentlichungstag und Bekanntmachung des Hinweises auf die Patenterteilung: **19.02.2003**
(21) Anmeldenummer: 01250288.6
(22) Anmeldetag: 06.08.2001
(51) Int. Cl.: F25B 39/04, F28F 1/24, F28D 7/04, F28D 1/06, B01J 3/00

(54) **Sorptionswärmepumpe**
Sorption heat pump
Pompe à chaleur à absorption

(30) Priorität: 04.08.2000 AT 13562000; 04.08.2000 AT 13552000
(43) Veröffentlichungstag der Anmeldung: 06.02.2002
(73) Patentinhaber: Vaillant GmbH, 42859 Remscheid (DE)
(72) Erfinder: Lang, Rainer, Dr., 51067 Köln (DE); Dawoud, Belal, Dr., 52066 Aachen (DE); Miltkau, Thorsten, 52066 Aachen (DE); Stricker, Marc, 52064 Aachen (DE)
(74) Vertreter: Hocker, Thomas

(56) Entgegenhaltungen:
- DE-A- 19 730 698
- DE-A- 19 802 670
- DE-A- 19 902 695
- DE-U- 29 906 482
- GB-A- 476 171
- GB-A- 620 293
- US-A- 1 962 054
- US-A- 2 214 344
- US-A- 2 365 797
- US-A- 3 810 778

## Beschreibung

Die Erfindung bezieht sich auf eine Sorptionswärmepumpe (siehe z.B. DE-A-19902695). Solche Sorptionswärmepumpen Art werden zur Beheizung von Gebäuden sowie zur Warmwasserbereitung eingesetzt. Sie zeichnen sich durch eine besonders gute Effizienz aus, da sie mit Hilfe eines thermodynamischen Kreisprozesses Umgebungswärme auf ein für Heiz- oder Warmwasserzwecke nutzbares Temperaturniveau anheben. Durch diesen Effekt können mit derartigen Wärmepumpen deutlich höhere primärenergetische Nutzungsgrade erreicht werden, als mit konventioneller Heiztechnik.

Bei Sorptionswärmepumpen der eingangs erwähnten Art sind in der Regel alle drei Bauteile in je einem vakuumdichten Behälter angeordnet. Dabei ergibt sich jedoch der Nachteil eines sehr erheblichen konstruktiven Aufwandes.

Wesentlich für den Effekt von Sorptionswärmepumpen ist ein guter Wärmeaustausch über den Verdampfer/Kondensator. Bei den bisherigen Lösungen wurde der Verdampfer/Kondensator durch einen Rohr-Wärmetauscher gebildet, der aus glatten, geraden Rohren hergestellt ist und auf einem ebenen Boden liegt.

Dabei läßt sich jedoch der Wärmeaustausch nur in einem mäßigen Ausmaß sicherstellen.

Ziel der Erfindung ist es, diesen Nachteil zu vermeiden und eine Sorptionswärmepumpe der eingangs erwähnten Art vorzuschlagen, die sich durch einen geringen konstruktiven Aufwand auszeichnet und bei dem im Bereich des Verdampfer/Kondensators ein sehr guter Wärmeaustausch sichergestellt ist.

Erfindungsgemäß wird dies bei einer Sorptionswärmepumpe der eingangs erwähnten Art durch den Anspruch 1 erreicht.

Durch die vorgeschlagenen Maßnahmen genügt es, einen einzigen vakuumdichten Behälter vorzusehen.

Durch die Merkmale des Anspruches 2 wird der Kältemittelstand angehoben. Dies bewirkt den Vorteil einer Vergrößerung der bei der Wärmeübertragung aktiven Verdampfungsoberfläche, da bereits bei geringen Füllständen des Kältemittels dieses Kältemittel einen erheblichen Teil oder gar die gesamte Fläche des Wärmeübertragers benetzt.

Durch die Merkmale des Anspruches 3 ist ein kostengünstiger, kompakter Aufbau möglich.

Durch die Merkmale des Anspruches 4 ergibt sich der Vorteil, dass sich bei einer vorgegebenen Kältemittelmenge ein sehr hoher Kältemittelstand ergibt, sodass bereits mit einer geringen Kältemittelmenge ein guter Wärmeübergang erzielt wird.

Durch die Merkmale des Anspruches 5 wird das Profil des Bodens näher beschrieben. In Verbindung mit den Merkmalen des Anspruchs 6 ergibt sich der Vorteil, dass die Spirale genau in dem Profil des Bodens liegen kann, was dafür sorgt, dass auch bei geringen Kältemittelmengen auf dem Boden ein hoher Kältemittelstand erreicht wird, wodurch es zu einem besseren Wärmeübergang kommt.

Durch die Merkmale des Anspruches 7 wird erreicht, dass der Kältemittelstand maximal ist. In dem Bereich, in dem die Spirale anliegt, gelangt Kältemittel zwischen die Wellen eines Ringwellrohres bzw. die Rippen bei spiralförmigen Rippenrohren an das Rohr.

Durch die Merkmale des Anspruches 8 wird erreicht, dass Kältemittel auch um die Wellen, Rippen oder dergleichen strömen kann.

Durch die Merkmale des Anspruches 9 ergibt sich eine sehr erhebliche Vergrößerung der Wärmetauscherfläche gegenüber den bisherigen Lösungen mit Wärmetauschern aus einem Glattrohr, wodurch ein sehr guter Wärmeaustausch sichergestellt ist. Außerdem weist ein Ringwellrohr aufgrund seiner Gestalt eine sehr hohe Flexibilität auf und läßt sich daher sehr leicht zu einer Spirale verformen. Eine solche zeichnet sich durch ein kleines Bauvolumen aus, wodurch der Vakuumbehälter klein gehalten werden kann. Überdies weist ein Ringwellrohr höhere Wärmeübertragungswerte auf als Rippenrohre, bei denen die Wärmeübertragung vom Kältemittel außerhalb des Rippenrohres zum Wärmeträger innerhalb des Rohres teilweise durch Wärmeleitung über die Rippen mit einem entsprechenden Rippenwirkungsgrad erfolgen muß.

Durch die Merkmale des Anspruches 10 ergibt sich der Vorteil eines sehr kompakten Aufbaus und einer geringen Masse des Verdampfers, wobei gleichzeitig eine große Verdampfungsoberfläche gegeben ist.

Durch die Merkmale des Anpruches 11 ergibt sich der Vorteil, daß sich bei einer vorgegebenen Kältemittelmenge ein sehr hoher Kältemittelstand ergibt, sodaß mit einer geringen Kältemittelmenge das Auslangen gefunden wird.

Die Erfindung wird nun anhand der Zeichnung näher erläutert. Dabei zeigen:
Fig. 1 eine erfindungsgemäße Sorptionswärmepumpe mit profiliertem Boden,
Fig. 2 schematisch einen profilierten Boden,
Fig. 3 einen Verdampfer/Kondensator samt Anschlüssen,
Fig. 4 den profilierten Boden von oben,
Fig. 5 ein Ringwellrohr in einem direkt anliegenden profilierten Boden,
Fig. 6 ein Ringwellrohr in einem profilierten Boden mit Spalt,
Fig. 7 eine weitere Ausführungsform einer erfindungsgemäßen Sorptionswärmepumpe,
Fig. 8 die Geometrie eins Ringwellrohres und
Fig. 9 schematisch einen Verdampfer/Kondensator mit Kältemittel-Füllstand

Gleiche Bezugszeichen bedeuten in allen Figuren gleiche Einzelteile.

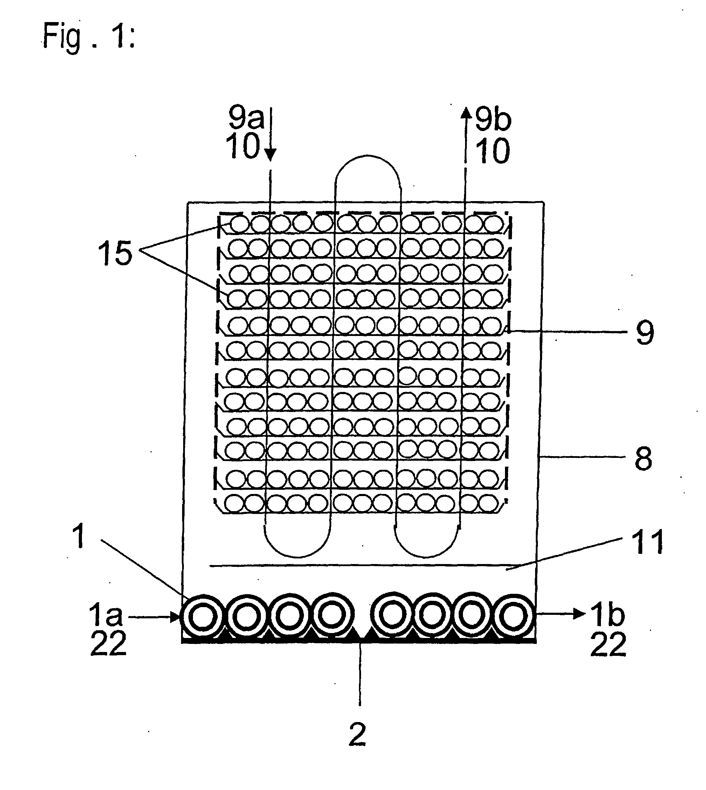

Die in der Fig. 1 dargestellte Anordnung stellt eine Sorptionswärmepumpe dar. Dabei ist ein Ad-/Desorber-Wärmetauscher 9 vorgesehen, der über einem Verdampfer/Kondensator-Wärmetauscher 1, der in einem vakuumdichten Behälter 8, der einen profilierten Boden 2 aufweist, angeordnet ist. Dabei ist auf dem Ad-/Desorber-Wärmetauscher 9 ein Adsorbens 15 aufgebracht.

Dabei ist zwischen dem Verdampfer/Kondensator-Wärmetauscher 1 und dem Ad-/Desorber-Wärmetauscher 9 ein Strahlungsschutz 11 angeordnet, der einen Wärmeaustausch durch Strahlungswärme zwischen den Wärmetauschern 9, 1 weitgehend unterbindet.

Die Anschlüsse 9a, 9b des Ad-/Desorber-Wärmetauschers 9 durchsetzen die obere Stirnseite des Behälters 8, wogegen die Anschlüsse 1a und 1b des Verdampfer/Kondensator-Wärmetauschers 1 den Mantel des Behälters 8 durchsetzen.

Während der Desorptionsphase wird dem Ad-/Desorber über den Anschluß 9a heißer Wärmeträger 10 zugeführt. Dadurch wird das im Adsorbens gespeicherte Adsorbat verdampft. Der Dampf strömt je nach Ausführung des Strahlungsschutzes 11 durch ihn hindurch und bzw. oder gegebenenfalls an ihm vorbei und wird auf dem Verdampfer/Kondensator 1 kondensiert. Die dabei freiwerdende Kondensationswärme wird von dem über den Anschluß (1a) zufließenden warmen Wärmeträger 22 aufgenommen und über den Anschluß 1b zu einem Verbraucher transportiert.

Nachdem der Adsorbens eine maximale Temperatur erreicht hat, wird die Zufuhr des heißen Wärmeträgers 10 unterbrochen. Die gesamte Sorptionswärmepumpe wird im folgenden abgekühlt.

In der folgenden Adsorptionsphase wird das auf dem Verdampfer/Kondensator gespeicherte flüssige Adsorbat durch Zufuhr eines kalten Wärmeträgers 22 verdampft.

Das dampfförmige Adsorbat strömt am Strahlungsschutz 11 vorbei und bzw. oder gegebenenfalls durch diesen hindurch und wird vom Adsorbens 15 adsorbiert.

Die dabei freiwerdende Adsorptionswärme wird vom warmen Wärmeträger 10 aufgenommen und zu einem Verbraucher transportiert.

Nachdem der Adsorbens eine minimale Temperatur erreicht hat, wird die Wärmepumpe durch Zufuhr von heißem Wärmeträger 10 wieder aufgeheizt und der Prozeß beginnt von neuem.

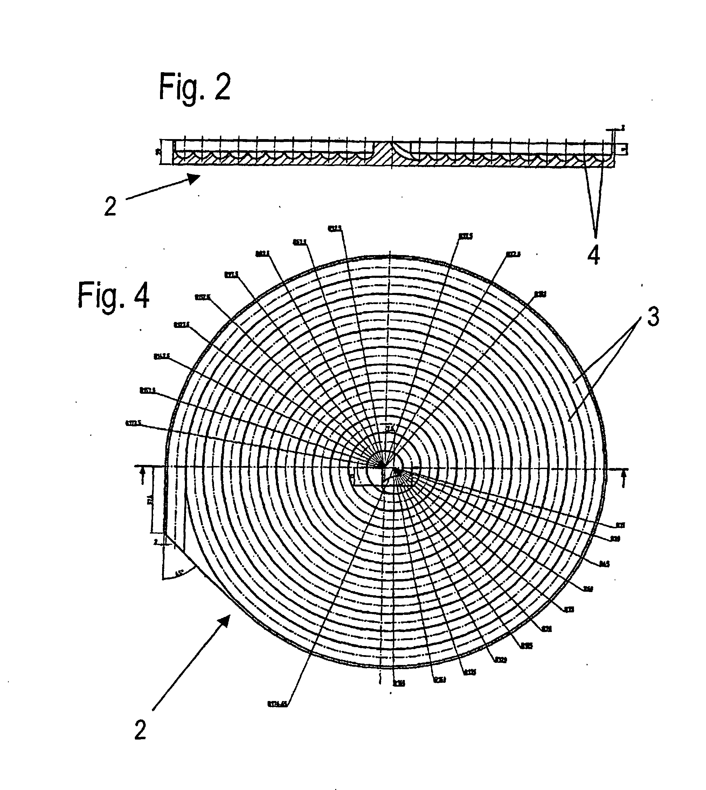

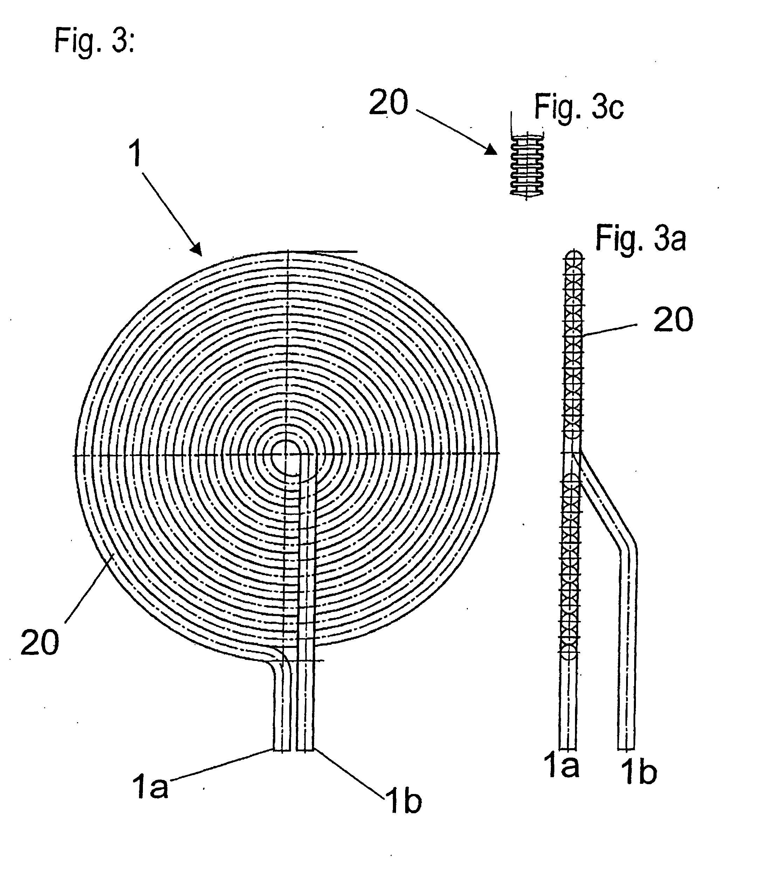

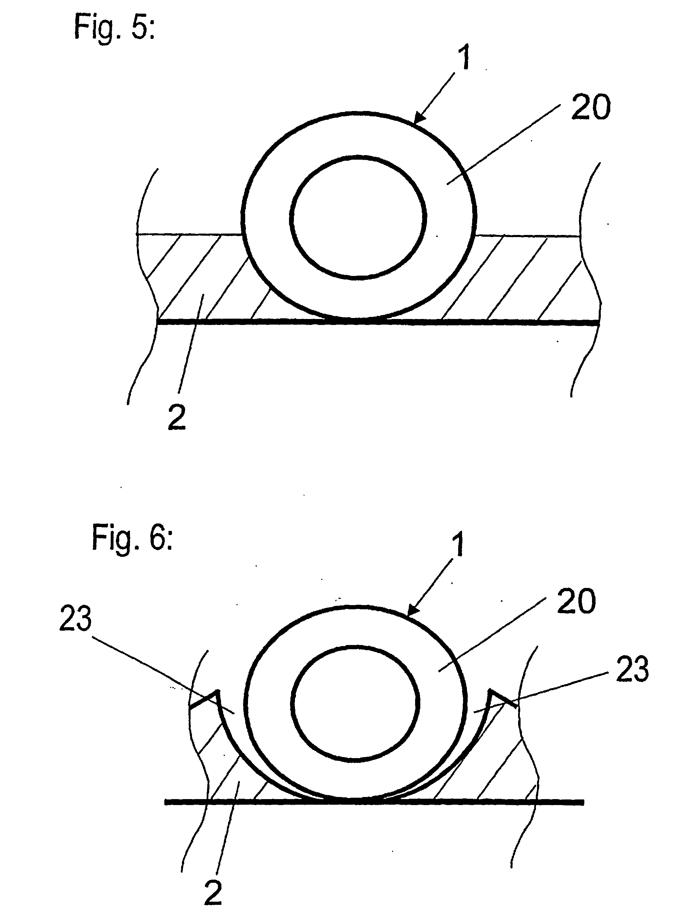

Wie aus der Fig. 2 und 4 zu ersehen ist, ist der Boden 2 des Behälters profiliert, so dass er die negative Form der Rohrwendel aus Fig. 3 darstellt.

Der Verdampfer/Kondensator 1 ist dabei, wie aus der Fig. 3 und 3a zu ersehen ist, spiralförmig ausgebildet. Dabei ist ein Rohr 20 zu einer Spirale verformt, wobei die Windungen dieser ebenen Spirale so dicht aneinander anliegen, daß die Wellen 19 des Rohres 20 aneinander anliegen.

Wie aus der Fig. 3a zu ersehen ist, ist der Anschluß 1b aus dem Zentrum der Spirale ausgebogen und über diese nach außen geführt, wogegen der Anschluß 1a eben aus der Spirale ausgebogen ist.

Jede Windung des Verdampfers/Kondensators 1 liegt in einer entsprechenden Rinne 4 des Bodens 2. Dieses Prinzip kann für beliebige Geometrien des Verdampfers/Kondensators 1 sowie für beliebige Rohrprofile (Glattrohr, Rippenrohr, Wellrohr, Strangpreßprofil, etc.) des Verdampfers/Kondensators 1 eingesetzt werden.

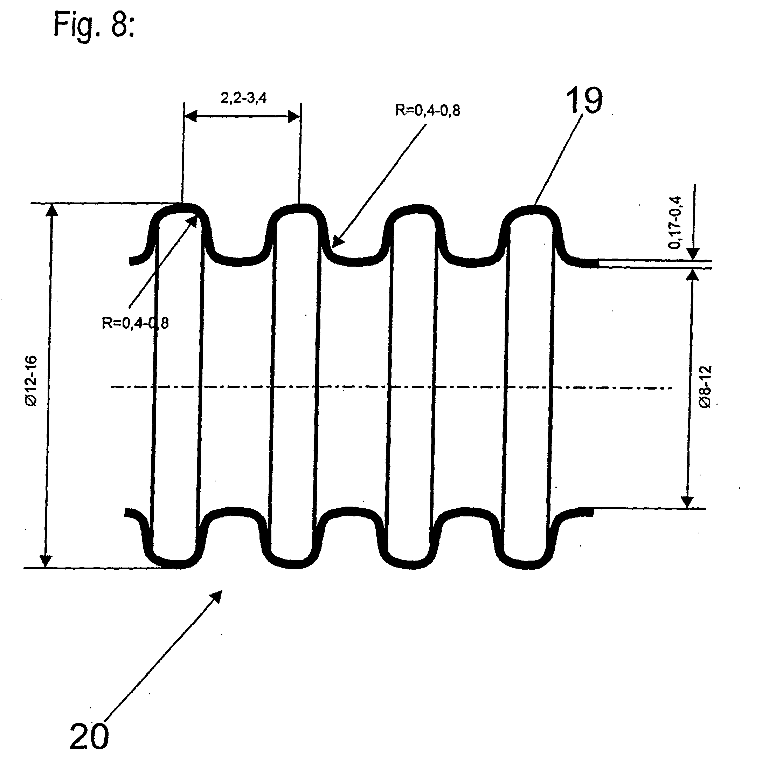

Fig. 5 zeigt ein Ringwellrohr 20 in einem direkt anliegenden profilierten Boden 2. Der Füllstand ist dabei maximal. Dabei zeigt die Fig. 8 die Geometrie eines solchen Ringwellrohres 20.

Demgegenüber kann in einem profilierten Boden mit Spalt 23 gemäß Fig. 6 auch entlang des Ringwellrohrs Kältemittel strömen. Das Ringwellrohr liegt punkt- oder linienförmig auf. Um den Füllstand nicht zu sehr zu beeinträchtigen, darf der Spalt 23 nicht zu groß sein.

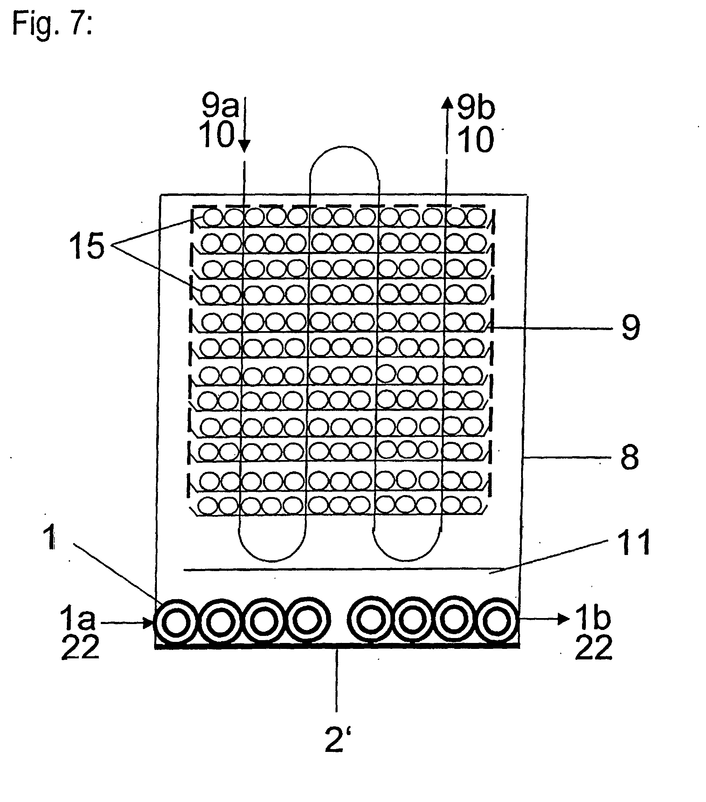

Die in der Fig. 7 dargestellte Anordnung stellt eine weitere Ausführungsform einer erfindungsgemäßen Sorptionswärmepumpe dar. Diese unterscheidet sich von jener nach der Fig. 1 dadurch, daß der vakuumdichte Behälter 8 einen glatten Boden 2' aufweist.

Die Fig. 8 zeigt die Geometrie eines Ringwellrohres 20, aus dem der Verdampfer/Kondensator 1 hergestellt ist. Dieses weist ringfömige Wellen 19 auf.

Dabei ist der Verdampfer/Kondensator 1, wie aus der Fig. 3 und 3a zu ersehen ist, spiralförmig ausgebildet. Dabei ist ein Ringwellrohr 20 zu einer Spirale verformt, wobei die Windungen dieser ebenen Spirale so dicht aneinander anliegen, daß.die Wellen 19 des Ringwellrohres 20 aneinander anliegen.

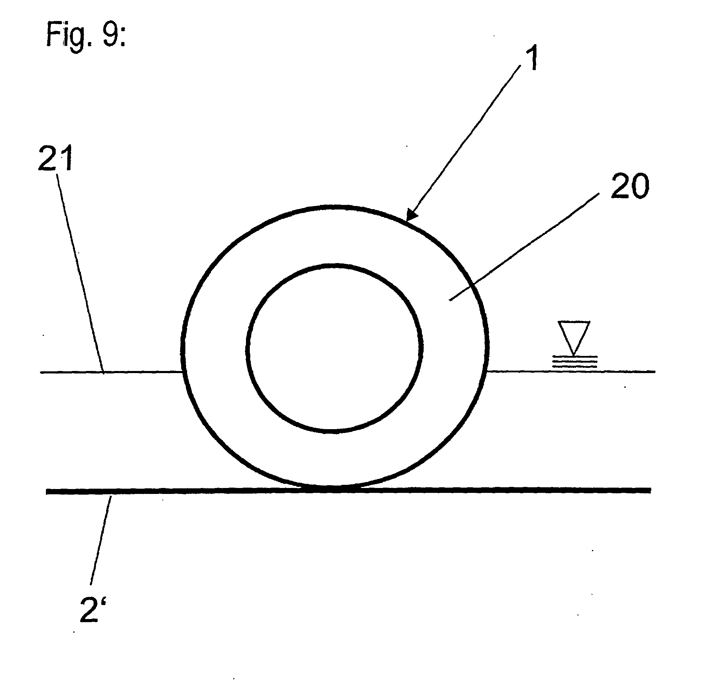

Wie aus der Fig. 9 zu ersehen ist, liegt die ebene Spirale des Verdampfer/Kondensators 1 an dem Boden 2' des Behälters 8 an. Dabei steht der Pegel 21 des Kältemittels je nach Betriebszustand der Anlage niedriger oder höher als in der Fig. 9 dargestellt, etwa nahe der Mitte des Querschnittes des Ringwellrohres 20 des Verdampfer/Kondensators 1.

## Patentansprüche

1. Sorptionswärmepumpe mit mindestens einem Ad-/Desorber-Wärmetauscher (9) und mindestens einem Verdampfer bzw. Kondensator (1), wobei der Ad-/Desorber-Wärmetauscher (9), der Verdampfer und Kondensator, die zu einem Verdampfer/Kondensator-Wärmetauscher (1) integriert sind, in einem gemeinsamen vakuumdichten Behälter (8) angeordnet sind, und der Verdampfer/Kondensator (1) an einem Boden (2) des Vakuumbehälters (8) anliegt.

2. Sorptionswärmepumpe nach Anspruch 1, **dadurch gekennzeichnet, daß** der Boden (2) des Vakuumbehälters (8) profiliert ausgebildet ist.

3. Sorptionswärmepumpe nach Anspruch 1 oder 2, **dadurch gekennzeichnet, dass** der Verdampfer/Kondensator-Wärmetauscher (1) durch ein Rohr gebildet ist, das zu einer Spirale verformt ist.

4. Sorptionswärmepumpe nach mindestens einem der Ansprüche 2 oder 3, **dadurch gekennzeichnet, daß** der Verdampfer/Kondensator (1) plan an dem profilierten Boden (2) des Vakuumbehälters (8) anliegt.

5. Sorptionswärmepumpe nach mindestens einem der Ansprüche 2 bis 4, **dadurch gekennzeichnet, dass** der profilierte Boden (2) eine spiralförmige Rinne (4) aufweist.

6. Sorptionswärmepumpe nach mindestens einem der Ansprüche 2 bis 5, **dadurch gekennzeichnet, dass** die spiralförmige Rinne (4) des profilierten Bodens (2) die gleiche Krümmung wie das spiralförmige Rohr (20) aufweist, so dass das spiralförmige Rohr (20) in der Vertiefung der spiralförmigen Rinne (4) des profilierten Bodens (2) liegt.

7. Sorptionswärmepumpe nach mindestens einem der Ansprüche 2 bis 6, **dadurch gekennzeichnet, dass** der profilierte Boden (2) des Vakuumbehälters (8) mindestens in einem Teilbereich des unteren Bereichs der Spirale direkt am äußeren Rand des Rohres (20) anliegt.

8. Sorptionswärmepumpe nach mindestens einem der Ansprüche 2 bis 7, **dadurch gekennzeichnet, dass** zwischen dem profilierten Boden (2) des Vakuumbehälters (8) und dem spiralförmigen Rohr (20) des Verdampfer/Kondensators (1) bis auf Punkt- oder Linienberührung zumindest ein kleiner Spalt besteht.

9. Sorptionswärmepumpe nach Anspruch 1, **dadurch gekennzeichnet, daß** der Verdampfer/Kondensator (1) durch ein Ringwellrohr (20) gebildet ist, das zu einer Spirale verformt ist.

10. Sorptionswärmepumpe nach Anspruch 9, **dadurch gekennzeichnet, daß beim** Verdampfer/Kondensator (1) die Wellen (19) des Ringwellrohres (20) nahe aneinander liegen und vorzugsweise einander berühren.

11. Sorptionswärmepumpe nach Anspruch 9 oder 10, **dadurch gekennzeichnet, daß** die Spirale des Verdampfer/Kondesators (1) plan an einem Boden (2) des Vakuumbehälters (8) anliegt.

## Claims

1. A sorption heat pump with at least one adsorber/desorber heat exchanger (9) and at least one evaporator and condenser (1), wherein the adsorber/desorber heat exchanger (9), the evaporator and the condenser, which latter two are integrated in an evaporator/condenser unit (1), are arranged in a common vacuum-proof vessel (8) and the evaporator/condenser (1) is in contact with a bottom surface (2) of the vacuum vessel (8).

2. A sorption heat pump as claimed in Claim 1 **characterised in that** the bottom (2) of the vacuum vessel (8) is provided with a profile.

3. A sorption heat pump heat exchanger as claimed in Claim 1 or 2 **characterised in that** the evaporator/condenser heat exchanger (1) is formed by a tube arranged in the form of a spiral

4. A sorption heat pump as claimed in at least one of the Claims 2 or 3 **characterised in that** the evaporator/condenser (1) is in flat contact with the profiled bottom (2) of the vacuum vessel (8).

5. A sorption heat pump as claimed in at least one of the of Claims 2 to 4 **characterised in that** the profiled bottom (2) is provided with a spiral-shaped groove (4).

6. A sorption heat pump as claimed in at least one of the Claims 2 to 5 **characterised in that** the spiral-shaped groove (4) of the profiled bottom (2) has the same curvature as the spiral tube (20), so that the spiral tube (20) rests in the spiral groove (4) of the profiled bottom (2).

7. A sorption heat pump as claimed in at least one of the Claims 2 to 6 **characterised in that** the profiled bottom (2) of the vacuum vessel (8), in at least a portion of the lower range of the spiral, is in direct contact with the outer rim of the tube (20).

8. A sorption heat pump as claimed in at least one of the Claims 2 to **7 characterised in that,** apart from point or line contact, there is at least a small gap between the profiled bottom (2) of the vacuum vessel (8) and the spiral tube (20) of the evaporator/condenser (1).

9. A sorption heat pump as claimed in Claim 1 **characterised in that** the evaporator/condenser (1) is formed by a corrugated tube (20) shaped so as to form as spiral.

10. A sorption heat pump as claimed in Claim 9 **characterised in that** on the evaporator/condenser (1) the corrugations (19) of the corrugated tube (20) are close together and preferably contact one another.

11. A sorption heat pump as claimed in Claim 9 or 10 **characterised in that** the spiral of the evaporator/condenser (1) is in flat contact with a bottom (2) of the vacuum vessel (8).

## Revendications

1. Thermopompe à sorption avec au moins un échangeur de chaleur adsorbant/désorbant (9) et au moins un évaporateur rsp. condensateur (1), l'échangeur de chaleur adsorbant/désorbant (9), l'évaporateur et le condensateur constituant un échangeur de chaleur à évaporateur/condensateur (1), étant disposés dans un carter à vide commun (8) étanche, et l'évaporateur-condensateur (1) reposant sur un fond (2) du carter (8).

2. Thermopompe à sorption suivant la revendication 1, **caractérisée par le fait que** le fond (2) du carter à vide (8) est muni de profils.

3. Thermopompe à sorption suivant la revendication 1 ou 2, **caractérisée par le fait que** l'échangeur de chaleur à évaporateur/condensateur (1) est formé par un tube en spirale.

4. Thermopompe à sorption suivant au moins l'une des revendications 2 ou 3, **caractérisée par le fait que** l'évaporateur/condensateur (1) s'appuie en plan sur le fond profilé (2) du carter (8).

5. Thermopompe à sorption suivant au moins l'une des revendications 2 à 4, **caractérisée par le fait que** le fond profilé (2) comporte une rigole (4) en spirale.

6. Thermopompe à sorption suivant au moins l'une des revendications 2 à 5, **caractérisée par le fait que** la rigole (4) du fond profilé (2) présente la même courbure que le tube en spirale (20) de sorte que le tube (20) repose dans le creux de la rigole (4) du fond profilé (2).

7. Thermopompe à sorption suivant au moins l'une des revendications 2 à 6, **caractérisée par le fait que** le fond profilé (2) du carter (8) touche au moins dans une partie de la partie inférieure de la spirale directement le bord extérieur du tube (20).

8. Thermopompe à sorption suivant au moins l'une des revendications 2 à 7, **caractérisée par le fait qu'**entre le fond profilé (2) du carter (8) et le tube (20) de l'évaporateur/condensateur (1), il existe une mince fente interrompue par des contacts ponctuels ou linéaires.

9. Thermopompe à sorption suivant la revendication 1, **caractérisée par le fait que** l'évaporateur/condensateur (1) est formé par un tube ondulé (20) en spirale.

10. Thermopompe à sorption suivant la revendication 9, **caractérisée par le fait que** les ondulations (19) du tube (20) sont très proches l'une de l'autre et, de préférence, se touchent.

11. Thermopompe à sorption suivant les revendications 9 ou 10, **caractérisée par le fait que** la spirale de l'évaporateur/condensateur (1) est en contact plan avec un fond (2) du carter à vide (8).
